(19) Europäisches Patentamt
European Patent Office
Office européen des brevets

(11) Publication number: **0 043 953**
**B1**

(12) **EUROPEAN PATENT SPECIFICATION**

(45) Date of publication of patent specification: **09.11.83**

(51) Int. Cl.³: **C 09 D 5/10**

(21) Application number: **81104897.4**

(22) Date of filing: **24.06.81**

(54) **Aluminium trihydrate modified zinc-rich coatings.**

(30) Priority: **30.06.80 US 164040**

(43) Date of publication of application:
**20.01.82 Bulletin 82/3**

(45) Publication of the grant of the patent:
**09.11.83 Bulletin 83/45**

(84) Designated Contracting States:
**DE FR GB IT NL SE**

(56) References cited:
DE - A - 2 752 803
US - A - 2 997 526
US - A - 4 267 089

(73) Proprietor: **UNION CARBIDE CORPORATION**
**Old Ridgebury Road**
**Danbury Connecticut 06817 (US)**

(72) Inventor: **Salensky, George Anthony**
**RD 3 Whitehouse Station**
**New Jersey, 08889 (US)**

(74) Representative: **Wuesthoff, Franz, Dr.-Ing. et al,**
**Patentanwälte Wuesthoff -v. Pechmann-Behrens-Goetz Schweigerstrasse 2**
**D-8000 München 90 (DE)**

**EP 0 043 953 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Aluminium trihydrate modified zinc-rich coatings

## BACKGROUND OF THE INVENTION

This invention pertains to zinc-rich coatings and more particularly to those containing thermoplastic polyhydroxyether and aluminum trihydrate.

Zinc-rich thermoplastic polyhydroxyether coatings have been used for corrosion protection particularly in the autombile industry. Such coatings are also electrically conductive and so may be used where welding is used for assembling parts. Electrical spot welding is the preferred method of assembling automotive components.

Zinc-rich coatings would be more widely used if certain deficiencies were corrected. These include corrosion resistance on passivated steel, welding spark/fume hazards, and poor weld strength. Zinc coating also tend to coat the electrodes of spot welders so that the number of repetitive welds produced on steel is reduced.

Spot welding and arc welding of steel requires temperatures in excess of 1300°C in order to obtain a melt that will flow together to form a bond. The spark temperature developed during arc welding is often 2000°C or higher, while somewhat lower temperatures are sufficient during spot welding since the electrode pressure aids the flow of the soft steel. In both cases, however, zinc has a tendency to volatilize in the weld area because zinc has a boiling point of 910°C. This is encouraged by the non-oxidizing environment, which is produced by the weld flux and the physical protection mechanism of the spot welding electrodes. Welding, therefore, results in an expulsion of zinc vapor which then readily oxidizes to zinc oxide upon leaving the weld area.

Aluminum trihydrate has been used in the past to improve the arc and arc track resistance of epoxy compositions intended for electrical applications. Normally, the arc or spark generated during an overvoltage causes carbonization on the surface of the epoxy resulting in a conductive path and producing a short circuit. The presence of aluminum trihydrate in the formulation eliminates the formation of the conductive carbon track. The mechanism postulated is that the water released by the aluminum hydrate at the arc temperature oxidizes the carbon to gaseous components. The actual mechanism has not been defined although it has been discussed in U.S. 2,997,526 and U.S. 2,997,527. The description of the test method for evaluating inclined plane tracking under arc conditions can be found in ASTM D 2303—68.

It is an object of this invention to impart such properties as reduced spark spatter, improved weld strength, and reduced electrode fouling in zinc-rich thermoplastic polyhydroxyether coatings.

Other objects will become apparent to those skilled in the art upon a further reading of the specification.

## SUMMARY OF THE INVENTION

A satisfactory metal-coating composition meeting the above-described electrical criteria has been provided by a composition comprising:

(A) a thermoplastic polyhydroxyether reactoin product of substantially equimolar amounts of a polynuclear dihydric phenol and epichlorohydrin, said thermoplastic polyhydroxyether having a degree of polymerization of at least about 80;

(B) 350 to 1350 parts by weight, per hundred parts of polyhydroxyether, of zinc pigment;

(C) 25 to 100 parts by weight, per hundred parts of polyhydroxyether, of aluminum trihydrate;

(D) 0 to 35 parts by weight, per hundred parts of polyhydroxyether, of a heat hardened resole phenol-aldehyde condensation resin; and

(E) 0 to 15 parts by weight, per hundred parts of polyhydroxyether, of a suspending agent.

Figure 1—A and B is a Scanning Electron Micrograph of zinc-rich coatings without and with aluminum trihydrate exposed to salt spray for 100 hours.

Figure 2—A and B is a Scanning Electron Micrograph at 1000X magnification of zinc-rich coating without aluminum trihydrate and containing aluminum trihydrate exposed to salt spray for 100 hours.

Figure 3 is a Scanning Electron Micrograph at 600X magnification of a spot welding electrode face which has been exposed to the welding of a zinc-rich coating.

The term "thermoplastic polyhydroxyether" herein refers to substantially linear polymers having the general formula:

$$\left[ D—O—E—O \right]_n$$

wherein D is the radical residuum of a dihydric phenol, E is an hydroxyl containing radical residue of an epoxide and n represents the degree of polymerization and is at least 30 and is preferably 80 or more. The term "thermoplastic polyhydroxyether" is intended to include mixtures of at least two thermoplastic polyhydroxyethers.

The thermoplastic poly(hydroxyethers) can be prepared by admixing from about 0.985 to about 1.015 moles of an epihalohydrin with one mole of a dihydric phenol together with from about 0.6 to 1.5 moles of an alkali metal hydroxide, such as, sodium hydroxide or potassium hydroxide generally in an aqueous medium at a temperature of about 10° to about 50°C until at least about 60 mole percent

of the epihalohydrin has been consumed. The thermoplastic poly(hydroxyethers) thus produced have reduced viscosities of at least 0.43. Reduced viscosity values were computed by use of the equation:

$$\text{Reduced Viscosity} = \frac{t_s - t_o}{ct_o}$$

wherein $t_o$ is the efflux time of the solvent (tetrahydrofuran, $t_s$ is the efflux time of the poly-(hydroxyether) solution, c is the concentration of the poly(hydroxyether) solution in terms of grams of poly(hydroxyether) per 100 ml. of tetrahydrofuran.

The dihydric phenol contributing the phenol radical residuum, D, can be either a dihydric mononuclear phenol such as those having the general formula:

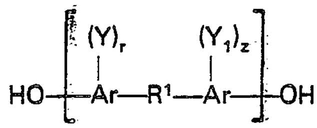

wherein Ar is an aromatic divalent hydrocarbon such as naphthylene and, preferably, phenylene, Y and $Y_1$ which can be the same or different are alkyl radicals, preferably having from 1 to 4 carbon atoms, halogen atoms, i.e., fluorine, chlorine, bromine and iodine, or alkoxy radicals, preferably having from 1 to 4 carbon atoms, r and z are integers having a value from 0 to a maximum value corresponding to the number of hydrogen atoms on the aromatic radical (Ar) which can be replaced by substituents and $R^1$ is a bond between adjacent carbon atoms as in dihydroxydiphenyl or is a divalent radical including, for example

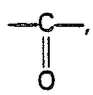,

—O—, —S—, —SO—, $—SO_2—$ and —S—S—, and divalent hydrocarbon radicals such as alkylene, alkylidene, cycloaliphatic, e.g., cycloalkylidene, halogenated alkoxy or aryloxy substituted alkylene, alkylidene and cycloaliphatic radicals as well as alkarylene and aromatic radicals including halogenated, alkyl, alkoxy or aryloxy substituted aromatic radicals and a ring fused to an Ar group; or $R^1$ can be polyalkoxy, or polysiloxy, or two or more alkylidene radicals separated by an aromatic ring, a tertiary amino group, an ether linkage, a carbonyl group or a sulfur containing group such as sulfoxide, and the like.

Examples of specific dihydric polynuclear phenols include among others:

The (bishydroxyphenyl) alkanes such as 2,2 - bis(4 - hydroxyphenol)propane, 2,4' - dihydroxydiphenylmethane, bis(2 - hydroxyphenyl)methane, bis(4 - hydroxyphenyl)methane, bis(4 - hydroxy - 2,6 - dimethyl - 3 - methoxyphenyl)methane, 1,1 - bis(4 - hydroxyphenyl ethane, 1,2 - bis(4 - hydroxyphenyl)ethane, 1,1 - bis(4 - hydroxy - 2 - chlorophenyl)ethane, 1,1 - bis(3 - methyl - 4 - hydroxyphenyl)ethane, 1,3 - bis(3 - methyl - 4 - hydroxyphenyl)propane, 2,2 - bis(3 - phenyl - 4 - hydroxyphenyl)propane, 2,2 - bis(3 - isopropyl - 4 - hydroxyphenyl)propane, 2,2 - bis(2 - isopropyl - 4 - hydroxyphenyl)propane, 2,2 - bis(4 - hydroxynaphthyl)propane, 2,2 - bis(4 - hydroxyphenyl)pentane, 3,3 - bis(4 - hydroxyphenyl)pentane, 2,2 - bis(4 - hydroxyphenyl)heptane, bis(4 - hydroxyphenyl)phenylmethane, bis(4 - hydroxyphenyl)cyclohexylmethane, 1,2 - bis(4 - hydroxyphenyl - 1,2 - bis(phenyl)propane, 2,2 - bis(4 - hydroxyphenyl) - 1 - phenyl - propane and the like;

Di(hydroxyphenyl)sulfones such as bis(4 - hydroxyphenyl)sulfone 2,4' - dihydroxydiphenyl sulfone, 5' - chloro - 2,4' - dihydroxydiphenyl sulfone, 5' - chloro - 4,4' - dihydroxydiphenyl sulfone and the like;

Di(hydroxyphenyl)ethers such as bis(4 - hydroxyphenyl)ether, the 4,3'-, 4,2'-, 2,2'-, 2,3'-, dihydroxydiphenyl ethers, 4,4' - dihydroxy - 2,6 - dimethyldiphenyl ether, bis(4 - hydroxy - 3 - isobutylphenyl)ether, bis(4 - hydroxy - 3 - isopropylphenyl)ether, bis(4 - hydroxy - 3 - chlorophenyl)ether, bis(4-hydroxy - 3 - fluorophenyl)ether, bis(4 - hydroxy - 3 - bromophenyl)ether, bis(4 - hydroxynaphthyl)ether, bis(4 - hydroxy - 3 - chloronaphthyl)ether, bis(2 - hydroxydiphenyl)ether, 4,4' - dihydroxy - 2,6 - di-methoxydiphenyl ether, 4,4' -dihydroxy - 2,5 - diethoxydiphenyl ether, and the like.

Also suitable are bisphenol reaction products of 4-vinylcyclohexene and phenols, e.g., 1,3-bis(p-hydroxyphenyl)-1-ethylcyclohexane and the bisphenol reaction products of dipentene or its isomers and phenols such as 1,2-bis(p-hydroxyphenyl)-1-methyl-4-isopropylcyclohexane as well as bisphenols such as 1,3,3 - trimethyl - 1 - (4 - hydroxyphenyl) - 6 - hydroxyindane, and 2,4-(4-hydroxyphenyl)-4-methylpentane, and the like.

Particularly desirable dihydric polynuclear phenols have the formula

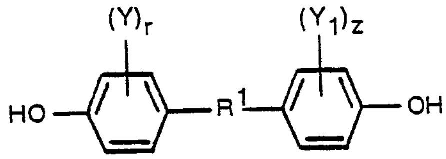

wherein Y and $Y_1$ are as previously defined, r and z have values from 0 to 4 inclusive and $R^1$ is a divalent saturated aliphatic hydrocarbon radical, particularly alkylene and alkylidene radicals having from 1 to 3 carbon atoms, and cycloalkylene radicals having up to and including 10 carbon atoms.

Mixtures of dihydric phenols can also be employed and whenever the term "dihydric phenol" or "dihydric polynuclear phenol" is used herein, mixtures of these compounds are intended to be included.

The epoxide contributing the hydroxyl containing radical residuum, E, can be monoepoxide or diepoxide. By "epoxide" is meant a compound containing an oxirane group, i.e., oxygen bonded to two vicinal aliphatic carbon atoms, thus,

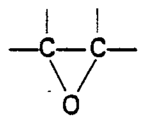

A monoepoxide contains one such oxirane group and provides a radical residuum E containing a single hydroxyl group, a diepoxide contains two such oxirane groups and provides a radical residuum E containing two hydroxyl groups. Saturated epoxides, by which term is meant diepoxides free of ethylenic unsaturation, i.e., $>C=C<$ and acetylenic unsaturation, i.e., $-C \equiv C-$, are preferred. Particularly preferred are halogen substituted saturated monoepoxides, i.e., the epihalohydrins and saturated diepoxides which contain solely carbon, hydrogen and oxygen, especially those wherein the vicinal or adjacent carbon atoms form a part of an aliphatic hydrocarbon chain. Oxygen in such diepoxides can be, in addition to oxirane oxygen, ether oxygen —O—, oxacarbonyl oxygen

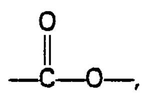

carbonyl oxygen

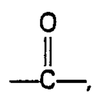

and the like.

Specific examples of monoepoxides include epichlorohydrins such as epichlorhydrin, epibromohydrin, 1,2-epoxy-1-methyl-3-chloropropane, 1,2-epoxy-1-butyl-3-chloropropane, 1,2-epoxy-2-methyl-3-fluoropropane, and the like.

Illustrative diepoxides include diethylene glycol bis(3,4 - epoxycyclohexane - carboxylate), bis (3,4 - epoxycyclohexyl - methyl)adipate, bis(3,4 - epoxycyclohexylmethyl)phthalate, 6 - methyl - 3,4 - epoxycyclohexylmethyl - 6 - methyl - 3,4 - epoxycyclohexane carboxylate, 2 - chloro - 3,4 - epoxycyclohexylmethyl - 2 - chloro - 3,4 - epoxycyclohexanecarboxylate, diglycidyl ether, bis(2,3 - epoxycyclopentyl)ether, 1,5 - pentanediol bis(4 - methyl - 3,4 - epoxycyclohexylmethyl)ether, bis(2,3 - epoxy - 2 - ethylhexyl)adipate, diglycidyl maleate, diglycidyl phthalate, 3 - oxatetracyclo$[4.4.0.1^{7,10}.0^{2,4}]$ - undec - 8 - yl 2,3 - epoxypropyl ether, bis(2,3 - epoxycyclopentyl)-sulfone, bis(3,4 - epoxyhexoxylpropyl)sulfone, 2,2' - sulfonyldiethyl, bis(2,3 - epoxycyclopentane-carboxylate), 3 - oxatetracyclo - $[4.4.0.1^{7,10}.0^{2,4}]$ - undec - 8 - yl 2,3 - epoxybutyrate, 4 - pentenal - di - (6 - methyl - 3,4 - epoxycyclohexylmethyl)acetal, ethylene glycol bis (9,10-epoxystearate), diglycidyl carbonate, bis(2,3 - epoxybutylpenyl) - 2 - ethylhexyl phosphate, diepoxydioxane, butadiene dioxide, and 2,3 - dimethyl butadiene dioxide. The preferred diepoxides are those wherein each of the oxirane groups is connected to an electron donating substituent which is not immediately connected to the carbon atoms of that oxirane group. Such diepoxides having the grouping

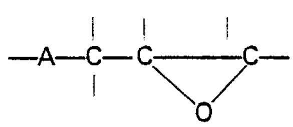

wherein A is an electron donating substituent such as —O—,

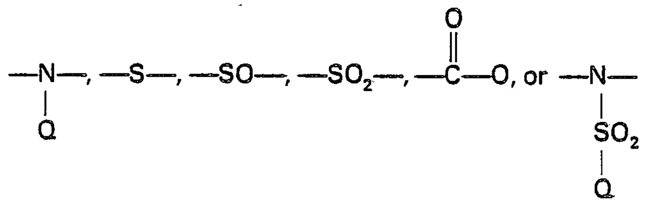

and Q is a saturated hydrocarbon radical such as an alkyl, cycloalkyl, aryl or aralkyl radical.

The zinc pigment used in this invention is commercially available and preferably has a particle size of about 2 to about 15 microns.

The resole phenol-aldehyde condensation products which can be used in this invention are produced by the condensation of phenols and aldehydes under alkaline conditions. A resole produced by the condensation of a phenol with formaldehyde most likely proceeds through an intermediate having the following illustrated type structure:

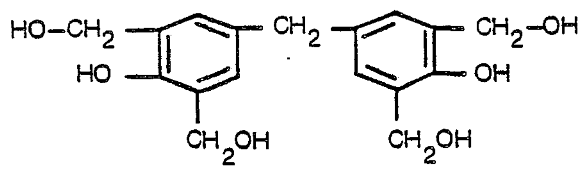

In a typical synthesis, resoles are prepared by heating one mole or phenol with about 1.5 moles of formaldehyde using sodium or barium hydroxide as a catalyst, although any phenolic compound, or a mixture of phenolic compounds having two or three reactive aromatic ring hydrogen positions, can be used with an aldehyde or aldehyde-liberating compound capable of undergoing phenol-aldehyde condensation. Illustrative of phenolic compounds are cresol, xylenol, ethylphenol, butylphenol, isopropylmethoxyphenol, chlorophenol, recorcinol, hydroquinone, naphthol, 2,2-bis(p-hydroxyphenol)propane, and the like. Illustrative of aldehydes are formaldehyde, acetaldehyde, acrolein, crontonaldehyde, furfural, and the like. Illustrative of aldehyde-liberating compounds are for example, paraformaldehyde, formalin and 1,3,5-trioxane. Ketones such as acetone are also capable of condensing with the phenolic compounds, as are methylene engendering agents such as hexamethylenetetramine, and are contemplated as useful for preparing the resole resins in this invention.

The condensation of phenolic compound and aldehyde, can of course, be conducted in the presence of other alkaline reagents such as sodium carbonate, sodium acetate, potassium hydroxide, ammonium hydroxide and the like, if desired. When the condensation reaction is completed, if desired, the water and other volatile materials can be removed by distillation, and the catalyst neutralized.

The most suitable resole resins are those which are brought to an advanced state of cure, commonly called the "B" stage, but are still heat-reactive. These resins are insoluble in water, readily soluble in conventional organic solvents such as methyl ethyl ketone, acetone, methanol, ethanol, and the like. Resole resins having a particularly desirable combination of properties are those which have an average molecular weight in the range between about 350 and 600.

Where suspending agents are used their nature is not critical and thus one can employ low molecular weight polyolefins, silane treated pyrogenic silica, quarternary, amine treated hydrous magnesium aluminum silicate, and the like.

Suitable solvents are used in applying the coating composition to the particular metallic substrate. The solvents used depend upon the nature of the application method. Thus for example, in spray coating it has been found useful to employ a mixture containing an aliphatic ketone having 3 to 6 carbons and aromatic hydrocarbons containing 7 to 9 carbons plus optional aliphatic alcohols containing 3 to 5 carbons, and the like. For roller-type applications one can use a mixture of Cellosolve acetate and aromatic hydrocarbons containing 7 to 12 carbons, and the like. It is convenient to use glycol esters such as Cellosolve acetate, (the acetate of a monoalkyl glycol ether sold under the Trademark Cellosolve by Union Carbide Corporation).

The preferred polyhydroxyether is available commercially as Bakelite Phenoxy PKHH, a trade designation of Union Carbide Corporation for condensation polymer derived from bisphenol-A (2,2-bis(p-hydroxyphenyl)propane and epichlorohydrin having the structural formula:

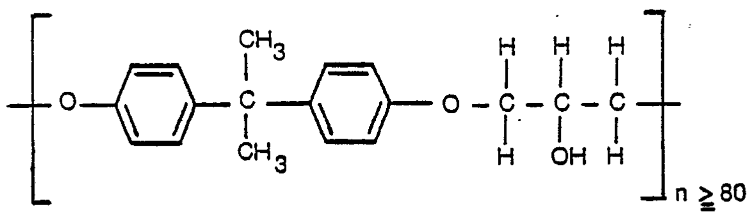

The phenoxy resin is available as a solution in glycol esters such as Cellosolve acetate (the acetate of a monoalkyl glycol ether sold under the Trademark Cellosolve by Union Carbide Corporation) or in pellet form which is readily soluble in a variety of solvents and solvent blends. The solid phenoxy resin sold under the designation PKDA—8500 by Union Carbide Corporation is soluble in the following solvents: Butyl Carbitol, Butyl Carbitol acetate, Butyl Cellosolve, Carbitol Solvent, Cellosolve acetate, Cellosolve Solvent, Diacetone alcohol, Diethyl Carbitol, Dimethylformamide, Dimethyl sulfoxide, Dioxane, Ethoxy triglycol, Mesityl oxide, Methyl Cellosolve acetate, Methyl ethyl ketone, and Tetrahydrofuran.

Carbitol is a Trademark of Union Carbide Corporation for the monoalkyl ether of diethylene glycol.

Electrical Properties

The electrical conductivities of aluminum trihydrate pigments were measured in order to determine their potential in weldable coatings. The conductance of a composite is dependent upon the electrical conductivity of the bulk material, its surface resistance and the magnitude of the organic insulating layer encapsulating the particles. Shape also is important since it determines the number of current paths.

Since the determination of electrical conductivity of a pigment in a coating is subject to the many variables mentioned above, the laboratory measurements were made on dry pigments. The test procedure was as follows. The measurement procedure involved a determination of the electrical resistivity of the test powders using a Wheatstone Bridge. The apparatus used included a General Radio 1644 A Megohm Bridge and a test cell made from a polystyrene Petri dish with cover. The top and bottom of the Petri dish are each centrally drilled for a No. 4 brass screw and washer which holds 10 mil copper discs which function as electrodes. The lower dish has an internal diameter of 8.7 cm, a depth of 1.3 cm and a volume of 77.3 cc.

The following procedure was used. The lower dish-electrode assembly was filled to over flowing with the powder to be tested. The excess powder was displaced by placing the cover electroded dish over the lower dish. A cork cylinder was placed on top of the cover so that a 500 gram weight could be centrally located on the cell and still permit making electrical contact with leads from the test cell and the megohm bridge. Resistivity measurements were then made using a 20 volt source. The reading in megohms was then converted to ohms/cc. or ohms-cm using the procedure of ASTM D 257.

The volume resistivity of various grades of aluminum trihydrate also known as aluminum hydrate, hydrated alumina or aluminum hydroxide, $Al(OH)_3$ are presented in Table 1 and compared with zinc powder and other typical coating pigments. It may be noted that both 1/2 micron hydrated alumina (Hydral 705) and 1 micron (Hydral 710) have electrical resistivities that are lower than the Zinc Dust Pigment L—15 and therefore will not degrade the electrical conductivity and electrical welding properties of zinc-rich coatings modified with them. Alcoa Z—331 (6—7 micron hydrated alumina pigment), however, has a higher resistivity and is not as desirable. A widely used corrosion inhibitive pigment, zinc phosphate, has a resistivity that is two orders of magnitude higher than zinc. Hydral 710 with its 1 micron particle size was used in the examples because it should provide good particle packing properties with the 6—8 micron zinc dust because a particle diameter ratio of 1 to 5 is considered optimum.

TABLE 1
Electrical Properties Of Pigments

| | Volume[(1)] Restivity | [(2)] |
|---|---|---|
| Aluminum Trihydrate — Alcoa 705 | $5.6 \times 10^5$ | $1.9 \times 10^9$ |
| Aluminum Trihydrate — Alcoa 710 | $1.7 \times 10^6$ | $6 \times 10^9$ |
| Zinc Dust L—15 | $5.8 \times 10^6$ | $2.0 \times 10^{10}$ |
| Aluminum Trihydrate — Alcoa 331 | $6.1 \times 10^7$ | $2.1 \times 10^{11}$ |
| Red Iron Oxide | $1.5 \times 10^7$ | $5.2 \times 10^{10}$ |
| Micaceous Iron Oxide | $1.7 \times 10^8$ | $5.9 \times 10^{11}$ |
| Zinc Phosphate | $2.1 \times 10^9$ | $7.4 \times 10^{12}$ |
| Talc | $>10^{12}$ | $>10^{15}$ |
| Atomized Aluminum Powder | $>10^{12}$ | $>10^{15}$ |

(1) ohms/cm$^3$ — petri dish test cell at 20 volts with general radio 1644A megohm bridge.
(2) ASTM D—257 ohm-cm.

The invention is further described in the Examples which follow. All parts and percentages are by weight unless otherwise specified.

Examples 1—6 and Controls A—C

Corrosion resistance was demonstrated by using aluminum trihydrate Alcoa 710 to modify zinc-rich phenoxy coatings at three different zinc levels. Twenty volume percent of the hydrated alumina was used to replace an equal volume of zinc or was added to the existing level of zinc in the Controls. The effect of the modification was then determined on salt spray resistance using unpassivated cold-rolled steel panels.

Table 2 summarizes the formulations and shows that the substitution or addition of hydrated alumina to the zinc-rich coating results in significant improvements in corrosion resistance.

The corrosion resistance improvement was unexpected since aluminum trihydrate is not noted as a corrosion-inhibitive pigment. The prior art contains no explanation of how the hydrated alumina interacts with the zinc to provide good corrosion resistance.

Scanning electron micrographs, however, provide some information on the physical properties of the corrosion products of the examples containing aluminum trihydrate versus the Control where zinc alone is used.

TABLE 2
COMPARISON OF PIGMENT MODIFIED ZINC RICH COATINGS
Salt spray resistance

| | Control A | 1 | 2 | Control B | 3 | 4 | Control C | 5 | 6 |
|---|---|---|---|---|---|---|---|---|---|
| Phenoxy PKHH[1] | 25.2 | 25.2 | 25.2 | 25.2 | 25.2 | 25.2 | 25.2 | 25.2 | 25.2 |
| Phenolic BKR—2620[2] | 6.3 | 6.3 | 6.3 | 6.3 | 6.3 | 6.3 | 6.3 | 6.3 | 6.3 |
| Suspending Agent # 1[3] | 1.1 | 1.1 | 1.1 | 1.1 | 1.1 | 1.1 | 1.1 | 1.1 | 1.1 |
| Suspending Agent # 2[4] | .7 | .7 | .7 | .7 | .7 | .7 | .7 | .7 | .7 |
| Zinc Pigment[5] | 315 | 252 | 315 | 179 | 143 | 179 | 415 | 332 | 415 |
| Aluminum Trihidrate[6] | — | 21.2 | 21.2 | — | 12 | 12 | — | 27.9 | 27.9 |
| Volume Zinc % | 61.5 | 49.2 | 54.7 | 47.6 | 38.1 | 43.9 | 67.8 | 54.2 | 59.7 |
| Volume Aluminum Trihydrate % | — | 12.3 | 10.9 | — | 9.5 | 8.7 | — | 13.6 | 11.9 |
| Pigment Volume Ratio — Zinc/Ath | 100/0 | 80/20 | 100/20 | 100/0 | 80/20 | 100/20 | 100/0 | 80/20 | 100/20 |
| Salt Spray Rating[7] | | | | | | | | | |
| Exposure 100 hrs. — Blisters | 8MD | 8F | 8F | 8M | 8F | 8M | 8M | 8F | — |
| Corrosion | 6 | 8 | 9 | 7 | 9 | 7 | 7 | 8 | 10 |
| 250 hrs. — Blisters | 8MD | 8F | 8F | 8M | 8F | 8M | 8M | 8F | 8F |
| Corrosion | 4 | 8 | 8 | 6 | 8 | 6 | 4 | 8 | 9 |
| 340 hrs. — Blisters | 8MD | 8F | 8F | 8M | 8F | 8M | 8M | 8F | 8F |
| Corrosion | 3 | 7 | 7 | 5 | 7 | 6 | 4 | 7 | 8 |

(1) Dissolved in cellosolve acetate (21% solids).
(2) Dissolved in cellosolve (21% solids).
(3) Aerosil R—972 — De Gussa®.
(4) MPA—60 NL Industries.
(5) L—15 Federated Metals Corp.
(6) Hydral 710 — 1 micron.
(7) Salt spray ASTM B—117.
(8) Applied to cold rolled steel and baked at 350°F/20 mins. 0.8-l mils (dry).

Examination of Figure 1 shows the presence of thread-like deposits on the surface of the mixtures containing aluminum trihydrate which are absent in formulations containing only zinc. Higher magnification (1000X) in Figure 2 provides more evidence of a multitude of small thread-like structures on the zinc-alumina trihydrate coating. The new surface structure may be expected to have better barrier properties than the formulation containing zinc alone. The thread-like structure seen resembles aluminum hydroxide formed on corroding aluminum.

The welding properties of the Examples and Controls were demonstrated by evaluating spark spatter and weld strength of coating steel specimens with a Model CSS—Mark 4, Type OOAH 15 kva spot welder using a 4-cycle welding interval and a 50-cycle hold or cooling period. Water cooled electrodes were used having a 1/4″ diameter with an 1/8″ and a 45° taper.

The following conditions were used:

| | | |
|---|---|---|
| Welding Time | — | 4 cycles of 60 cycle/sec current |
| Phase Shift Heat Control | — | 60% |
| Hold Time | — | 50 cycles |
| Gage Clamping Pressure | — | 75 psi |
| Clamp Force | — | 100 pounds |
| Electrode Face Pressure | — | 8150 psi |

The data in Table 3 demonstrates that spark spatter is decreased and welding strength increased when hydrated alumina is substituted for or added to zinc rich phenoxy coatings. The spark spatter data is the result of visual observations during welding. Weld strength was determined by placing the composites under torsion until broken by hand. These are relative values showing significant differences. The weld nugget was also examined and found to be cleaner and better shaped when the aluminum trihydrate formulations were used. A similar observation was made on the copper welding electrodes. The aluminum trihydrate formulations provided less buildup or bonding.

It may be inferred from this that the zinc oxide formed has less of a tendency to stick to the copper electrodes than due the zinc metal particles which can alloy with the copper. A scanning electron micrograph (Figure 3) shows that the spherical particles of metallic zinc tend to imbed themselves into the face of the copper electrode.

TABLE 3

COMPARISON OF PIGMENT MODIFIED ZINC RICH COATINGS

Spot welding properties (metal to metal)

| | Control A | 1 | 2 | Control B | 3 | 4 | Control C | 5 | 6 |
|---|---|---|---|---|---|---|---|---|---|
| Phenoxy PKHH[1] | 25.2 | 25.2 | 25.2 | 25.2 | 25.2 | 25.2 | 25.3 | 25.2 | 25.2 |
| Phenolic BKR—2620[2] | 6.3 | 6.3 | 6.3 | 6.3 | 6.3 | 6.3 | 6.3 | 6.3 | 6.3 |
| Suspending Agent # 1[3] | 1.1 | 1.1 | 1.1 | 1.1 | 1.1 | 1.1 | 1.1 | 1.1 | 1.1 |
| Suspending Agent # 2[4] | .7 | .7 | .7 | .7 | .7 | .7 | .7 | .7 | .7 |
| Zinc Pigment[5] | 315 | 252 | 315 | 179 | 143 | 179 | 415 | 332 | 415 |
| Aluminum Trihydrate[6] | — | 21.2 | 21.2 | — | 12 | 12 | — | 27.9 | 27.9 |
| Volume Zinc % | 61.5 | 49.2 | 54.7 | 47.6 | 38.1 | 43.9 | 67.8 | 54.2 | 59.7 |
| Volume Aluminium Trihydrate % | — | 12.3 | 10.9 | — | 9.5 | 8.7 | — | 13.6 | 11.9 |
| Pigment Volume Ratio — Zinc/Ath | 100/0 | 80/20 | 100/20 | 100/0 | 80/20 | 100/20 | 100/0 | 80/20 | 100/20 |
| Spark Spatter — Feet | 4 | 0 | 0 | 3 | 1 | 1 | 2 | 1 | 1 |
| Weld Strength | M | G | BG | VP | M—G | VG | M—G | VG | M—G |

(1) Dissolved in cellosolve acetate (21% solids).
(2) Dissolved in cellosolve (21% solids).
(3) Aerosil R—972 — De Gussa.
(4) MPA—60 NL Industries.
(5) L—15 Federated Metals Corp.
(6) Hydral 710 — 1 micron.
(7) Applied to cold rolled steel and baked at 350°F/20 mins. at 0.1·l mils dry.
(8) Torsion Shear — VP — Very Poor
P — Poor
M — Medium
G — Good
VG — Very Good

Trade names of the pigments used are tabulated below.

| | |
|---|---|
| Aluminum Trihydrate | — Hydral 705 (1/2 micron) Alcoa |
| | — Hydral 710 (1 micron) Alcoa |
| | — C—331 (6—7 microns) Alcoa |
| Zinc Pigment | — L—15 Federated Metals Corp. |
| Zinc Phosphate | — Reichard-Coulston, Inc. |

The following code was used for exposure ratings for coatings in the above-enumerated tests:

10 — No Change
9 — Very Slight Change
8 — Slight Change
7 — Medium +
6 — Medium
5 — Medium −
4 — Slightly Bad
3 — Bad
2 — Very Bad
1 — Partial Failure
0 — Failure

Blisters — F = Few
M = Medium
D = Dense

**Claims**

1. Coating composition comprising:
(A) a thermoplastic polyhydroxyether reaction product of substantially equimolar amounts of a polynuclear dihydric phenol and epichlorohydrin, said thermoplastic polyhydroxyether having a degree of polymerization of at least about 30;
(B) 350 to 1350 parts by weight, per 100 parts of polyhydroxyether, of zinc pigment;
(C) 25 to 100 parts by weight, per 100 parts of polyhydroxyether, of aluminum trihydrate;
(D) 0 to 35 parts by weight, per 100 parts of polyhydroxyether, of a heat hardened resole phenolaldehyde condensation resin; and
(E) 0 to 15 parts by weight, per 100 parts of polyhydroxyether, of a suspending agent.

2. Composition claimed in claim 1 containing 35 to 70 parts by weight of aluminum trihydrate.

3. Composition claimed in claim 1 containing 20 to 30 parts by weight of resole phenolaldehyde condensation resin.

4. Composition claimed in claim 1 containing 4 to 10 parts by weight of a suspending agent.

5. Composition claimed in claim 1 wherein the polynuclear dihydric phenol is 2,2-bis(4-hydroxyphenyl)propane.

6. Composition claimed in claim 1 dissolved in a glycol ester.

7. Composition claimed in claim 6 wherein the glycol ester is ethylene glycol monoethyl ether acetate.

8. Composition claimed in claim 1 dissolved in a mixture of ethylene glycol monoethyl ether acetate and an aromatic hydrocarbon containing 7 to 8 carbons.

9. Composition claimed in claim 1 dissolved in a mixture of an aliphatic ketone containing 3 to 6

carbons and an aromatic hydrocarbon containing 7 to 9 carbons.

10. Composition claimed in claim 1 dissolved in a mixture of an aliphatic ketone containing 3 to 6 carbons, an aromatic hydrocarbon containing 7 to 9 carbons and an aliphatic alcohol containing 3 to 5 carbons.

11. Corrosion resistant article comprising a metallic substrate and adhering thereto as a coating a composition comprising:

(A) a thermoplastic polhydroxyether reaction product of substantially equimolar amounts of a polynuclear dihydric phenol and epichlorohydrin, said thermoplastic polyhydroxyether having a degree of polymerization of at least about 30;

(B) 350 to 1350 parts by weight, per 100 parts of polyhydroxyether, of zinc pigment;

(C) 25 to 100 parts by weight, per 100 parts of polyhydroxyether, of aluminum trihydrate;

(D) 0 to 35 parts by weight, per 100 parts of polyhydroxyether, of a heat hardened resole phenol-aldehyde condensation resin; and

(E) 0 to 15 parts by weight, per 100 parts of polyhydroxyether, of a suspending agent.

12. Article claimed in claim 11 wherein the polynuclear dihydric phenol is 2,2-bis(4-hydroxyphenyl)propane.

**Revendications**

1. Composition de revêtement, comprenant:

(A) un polyhydroxyéther thermoplastique qui est le produit de réaction de quantités pratiquement équimolaires d'un phénol dihydroxylique polynucléaire et de l'épichlorhydrine, ledit polyhydroxyéther thermoplastique ayant un degré de polymérisation d'au moins environ 30;

(B) 350 à 1350 parties en poids, pour 100 parties en poids de polyhydroxyéther, de pigment au zinc;

(C) 25 à 100 parties en poids, pour 100 parties en poids de polyhydroxyéther, de trihydrate d'aluminium;

(D) 0 à 35 parties en poids, pour 100 parties de polyhydroxyéther, d'un resol durci à la chaleur qui est une résine de condensation phénol-formaldéhyde; et

(E) 0 à 15 parties en poids, pour 100 parties de polyhydroxyéther, d'un agent de mise en suspension.

2. Composition suivant la revendication 1, contenant 35 à 70 parties en poids de trihydrate d'aluminium.

3. Composition suivant la revendication 1, contenant 20 à 30 parties en poids de résine de condensation phénol-aldéhyde du type résol.

4. Composition suivant la revendication 1, contenant 4 à 10 parties en poids d'un agent de mise en suspension.

5. Composition suivant la revendication 1, dans laquelle le phénol dihydroxylique polynucléaire est le 2,2-bis(4-hydroxyphényl)propane.

6. Composition suivant la revendication 1, dissoute dans un ester de glycol.

7. Composition suivant la revendication 6, dans laquelle l'ester de glycol est l'acétate de l'éther monoéthylique de l'éthylèneglycol.

8. Composition suivant la revendication 1, dissoute dans un mélange d'acétate d'éther monoéthylique d'éthylèneglycol et d'un hydrocarbure aromatique contenant 7 ou 8 atomes de carbone.

9. Composition suivant la revendication 1, dissoute dans un mélange d'une cétone aliphatique contenant 3 à 6 atomes de carbone et d'un hydrocarbure aromatique contenant 7 à 9 atomes de carbone.

10. Composition suivant la revendication 1, dissoute dans un mélange d'une cétone aliphatique contenant 3 à 6 atomes de carbone, d'un hydrocarbure aromatique contenant 7 à 9 atomes de carbone et d'un alcool aliphatique contenant 3 à 5 atomes de carbone.

11. Article résistant à la corrosion, comprenant un substrat métallique auquel adhère, sous la forme d'un revêtement, une composition comprenant:

(A) un polyhydroxyéther thermoplastique qui est le produit de réaction de quantités pratiquement équimolaires d'un phénol polynucléaire dihydroxylique et d'épichlorhydrine, ledit polyhydroxyéther thermoplastique ayant un degré de polymérisation d'au moins environ 30;

(B) 350 à 1350 parties en poids, pour 100 parties de polyhydroxyéther, d'un pigment au zinc;

(C) 25 à 100 parties en poids, pour 100 parties de polyhydroxyéther, de trihydrate d'aluminium;

(D) 0 à 35 parties en poids, pour 100 parties de polyhydroxyéther, d'un résol durci à la chaleur qui est une résine de condensation phénol-aldéhyde; et

(E) 0 à 15 parties en poids, pour 100 parties de polyhydroxyéther, d'un agent de mise en suspension.

12. Article suivant la revendication 11, dans lequel le phénol polynucléaire dihydroxylique est le 2,2-bis(4-hydroxyphényl)propane.

**Patentansprüche**

1. Überzugsmasse, enthaltend

(A) einen thermoplastischen Polyhydroxyether, der das Reaktionsprodukt von im wesentlichen äquimolaren Mengen eines mehrkernigen zweiwertigen Phenols und Epichlorhydrin ist und einen Polymerisationsgrad von zumindest etwa 30 aufweist;

(B) 350 bis 1350 Gew.-Teile — auf 100 Teile Polyhydroxyether — eines Zinkpigments;

(C) 25 bis 100 Gew.-Teile — auf 100 Teile Polyhydroxyether — Aluminiumtrihydrat;

(D) 0 bis 35 Gew.-Teile — auf 100 Teile Polyhydroxyether — eines wärmegehärteten Phenol/Aldehyd-Kondensationsprodukts (Resol) und

(E) 0 bis 15 Gew.-Teile — auf 100 Gew.-Teile Polyhydroxyether — eines Suspensionsmittels.

2. Masse nach Anspruch 1, enthaltend 35 bis 70 Gew.-Teile Aluminiumtrihydrat.

3. Masse nach Anspruch 1, enthaltend 20 bis 30 Gew.-Teile Phenol/Aldehyd-Kondensationsprodukt.

4. Masse nach Anspruch 1, enthaltend 4 bis 10 Gew.-Teile Suspensionsmittel.

5. Masse nach Anspruch 1, worin das mehrkernige zweiwertige Phenol 2,2-bis(4-Hydroxyphenyl)propan ist.

6. Masse nach Anspruch 1, gelöst in einem Glykolester.

7. Masse nach Anspruch 6, wobei der Glykolester Ethylenglykolmonoethyletheracetat ist.

8. Masse nach Anspruch 1, gelöst in einem Gemisch von Ethylenglykolmonoethyletheracetat und einem aromatischen Kohlenwasserstoff enthaltend 6 oder 7 C—Atome.

9. Masse nach Anspruch 1, gelöst in einem Gemisch eine aliphatischen Ketons enthaltend 3 bis 6 C-Atome und eines aromatischen Kohlenwasserstoffs enthalend 7 bis C—Atome.

10. Masse nach Anspruch 1, gelöst in einem Gemisch eines aliphatischen Ketons enthaltend 3 bis 6 C-Atome, eines aromatischen Kohlenwasserstoffs enthaltend 7 bis 9 C—Atome und eine aliphatischen Alkohol, enthaltend 3 bis 5 C—Atome.

11. Korrosionsbeständiger Gegenstand enthaltend einen metallischen Grundkörper und darauf haftend einen Überzug aus einer Masse enthaltend

(A) einen thermoplastischen Polyhydroxyether, der das Reaktionsprodukt von im wesentlichen äquimolaren Mengen eines mehrkernigen zweiwertigen Phenols und Epichlorhydrin ist und einen Polymerisationsgrad von zumindest etwa 30 besitzt;

(B) 350 bis 1350 Gew.-Teile — bezogen auf 100 Teile Polyhydroxyether — eines Zinkpigments;

(C) 25 bis 100 Gew.-Teile — bezogen auf 100 Teil Polyhydroxyether-Aluminiumtrihydrat;

(D) 0 bis 35 Gew.-Teile — bezogen auf 100 Teile Polyhydroxyether — eines wärmegehärteten Phenol/Aldehyd-Kondensationsprodukts (Resol) und

(E) 0 bis 15 Gew.-Teile — bezogen auf 100 Teile Polyhydroxyether — Suspensionsmittel.

12. Gegenstand nach Anspruch 11, wobei das mehrkernige zweiwertige Phenol 2,2-bis(4-Hydroxyphenyl)propan ist.

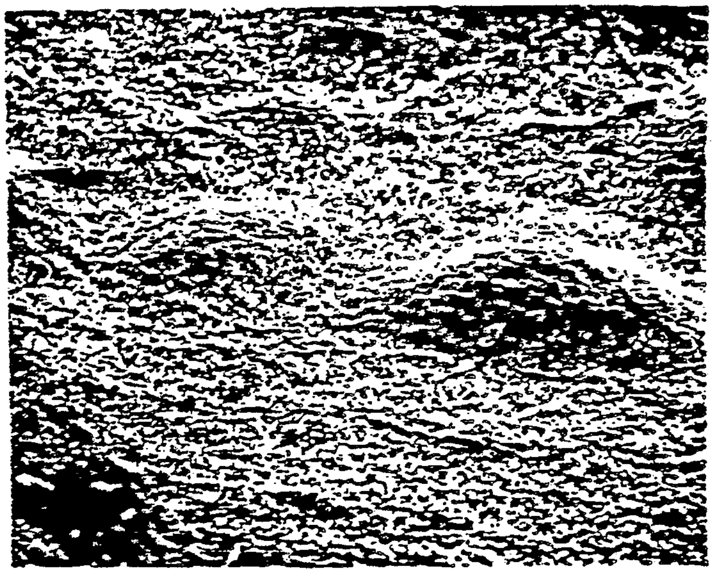

FIG. 1A

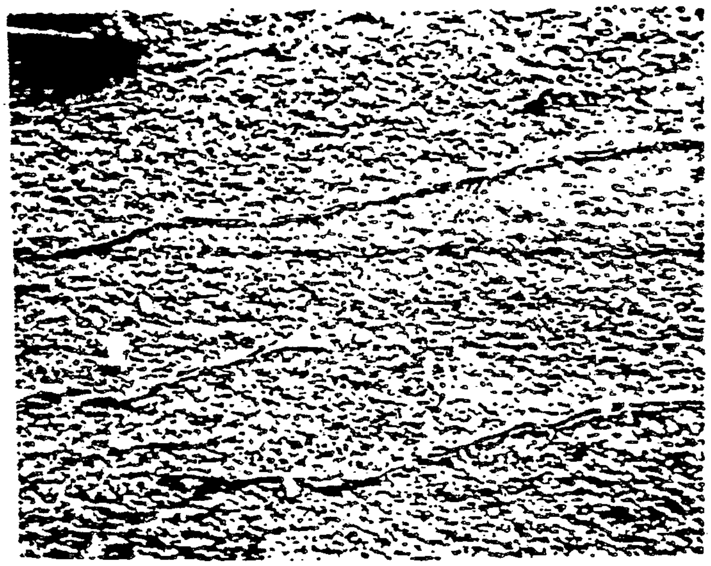

FIG. 1B

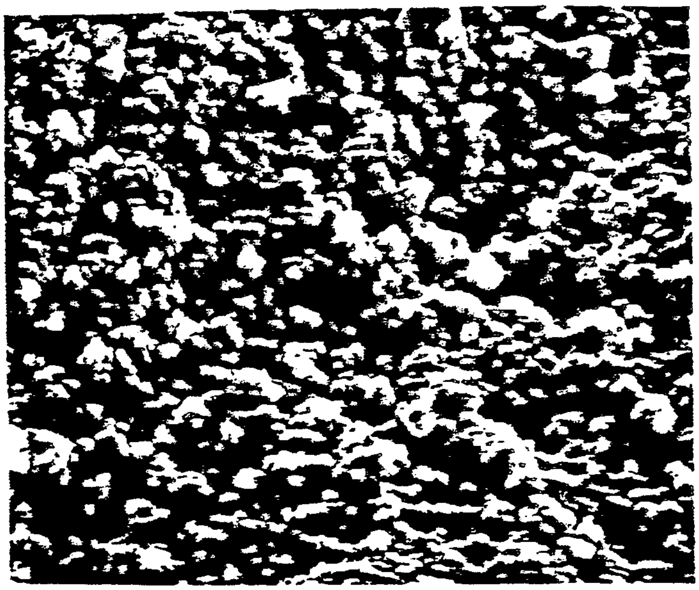

FIG. 2A

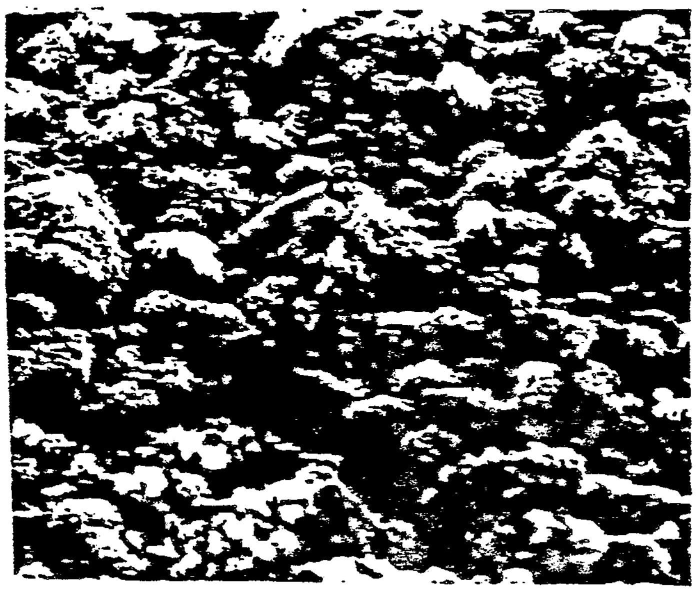

FIG. 2B

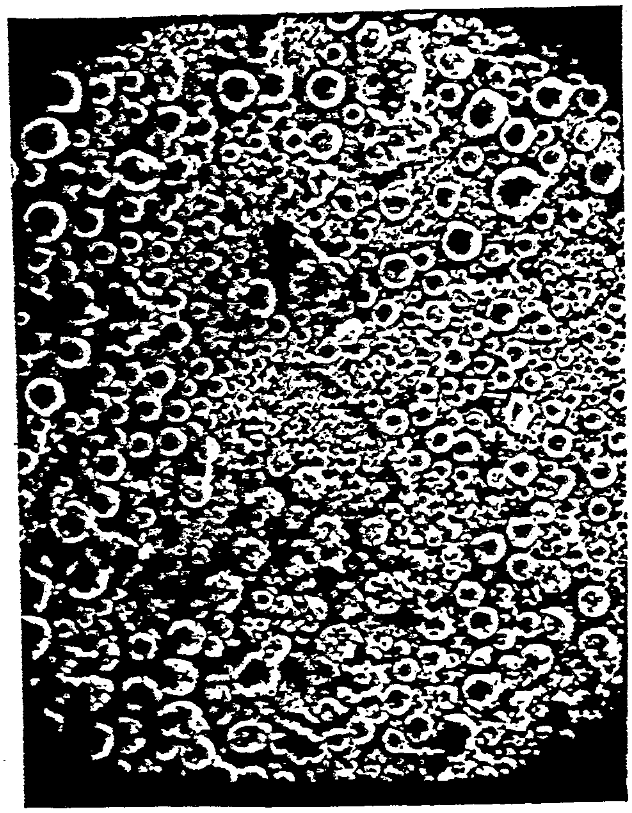

FIG. 3